# EUROPÄISCHE PATENTSCHRIFT

(11) **EP 0 566 767 B1**
(45) Veröffentlichungstag und Bekanntmachung des Hinweises auf die Patenterteilung: **03.07.1996**
(21) Anmeldenummer: 92106966.2
(22) Anmeldetag: 23.04.1992
(51) Int. Cl.: F02M 31/12

(54) **Kraftstoffheizeinrichtung**
Fuel heating apparatus
Installation de chauffage de carburant

(43) Veröffentlichungstag der Anmeldung: 27.10.1993
(73) Patentinhaber: Drevensek, Rudi, YU-69000 Murska Sobota, Slowenien (YU)
(72) Erfinder: Drevensek, Rudi, YU-69000 Murska Sobota, Slowenien (YU)
(74) Vertreter: Lewald, Dietrich, Dipl.-Ing.

(56) Entgegenhaltungen:
- EP-A- 0 086 602
- DE-A- 3 120 960
- DE-A- 3 404 817
- DE-A- 3 510 728
- DE-U- 8 523 335
- US-A- 3 768 730

## Beschreibung

### Technisches Gebiet

Die Erfindung betrifft eine Kraftstoffheizeinrichtung gemäß Oberbegriff von Anspruch 1, wie aus der DE-A-3 120 960 bekannt.

### Stand der Technik

Aus der deutschen Patentanmeldung DE 3404817 A1 ist die Regulierung der Kraftstofförderung, vorzugsweise des Dieselkraftstoffs, bekannt, welche durch drei Heizkörper,angebracht im Kraftstoffbehälter,im Vorfilter der Vorpumpe und im Hauptfilter, durchgeführt wird. Der Nachteil dieser Erwärmung des eingefrorenen Kraftstoffs ist der, daß das Heizelement im Kraftstoffbehälter im Grobfilter eingebaut ist,welcher samt der Saugleitung auf dem Boden des Kraftstoffbehälters angebracht ist,was eine Häufige Verstopfung des Filters und der Leitung durch Unreinigkeiten verursacht,gleichzeitig aber nicht genügende Mengen von Kraftstoff erwärmt,die für das Füllen des Hauptfilters und hiermit für ein ungestörtes Funktionieren des Motors unbedingt notwendig sind.Ein weiterer Nachteil dieser bekannten Erwärmung ist der,daß die Druck- und Hochdruckleitungen nicht wärmeisoliert sind,womit keine konstant gleiche Temperaturen in allen Leitungen erreicht werden,was zu einem höheren Kraftstoffverbrauch führt.Ein weiterer Nachteil ist der,daß bei Filterwechsel bzw. Filtereinsatzwechsel im Kraftstoffbehälter,in der Vorpumpe und im Hauptfilter zusammen mit diesen auch die Drahtheizelemnte wegggeworfen werden,die in der Filterfläche am gesamten Mantel angebracht werden und in den Außenrand des Filtereinsatzes eingedruckt sind. Noch ein weiterer Nachteil ist der,daß bei der Montage und regelmäßiger Reinigung der Filter und Filtereinsätze die Drahtheizelemente oft beschädigt und vernichtet werden.Es ist auch ein Nachteil,daß diese Ausführung der Erwärmung eingefrorenen Kraftstoffs sehr anspruchsvoll und teuer ist.

Anhand oben angeführter Nachteile der bekannten Erwärmung des eingefrorenen Kraftstoffs durch Regulierung der Kraftstofförderung, ist keine breitere Anwendung in der Praxis festzustellen.

### Technisches Problem

Es betrifft die Mangelhaftigkeiten bei bisher bekannten Kraftstoffeinrichtungen,welche keine effektvolle,sichere und rationelle Kraftstoffheizung,vorzugsweise Dieselkraftstoffe, ermöglichen; diese Nachteile zeigen sich insbesondere darin,daß sie das technische Problem der Verstopfung im System zur Speisung des Kraftstoffmotors bei niedrigen Temperaturen,besonders bei Temperauturen von unter -35°C,nicht vollkommen abschaffen können.Bei niedrigen Temperaturen friert der Dieselkraftstoff ein, wobei Paraffinausscheidungen entstehen,die in erster Phase den Durchfluß des Kraftstoffs bis zum Vorfilter,Hauptfilter,Hochdruckpumpe und Motor erschweren,nachher aber verhindern.Auf diese Weise wird die Motorzündung bei niedrigeren Temperaturen erschwert,bei niedrigen und extrem niedrigen Temperaturen aber verhindert.

### Beschreibung der Lösung des technischen Problems mit Ausführungsbeispielen und Figuren

Bezüglich des vorher behandelten technischen Problems wird dieses durch die Kraftstoffheizeinrichtung nach unserer Erfindung gelöst werden,die keine bisher bekannten Nachteile,sondern folgende Vorteile haben wird:
- es wird möglich sein,das gesamte Zuleitungskraftstoffsystem vom Kraftstoffbehälter bis zur Hochdruckpumpe zu beheizen,
- es wird möglich sein, den eingefrorenen Kraftstoff in allen Zwischenelementen des Zuleitungssystems auch bei extrem niedrigen Temperaturen,auch unter -35°C,zu schmelzen,
- Zündung und Normalbetrieb des Motors werden trotz äußerst niedrigen Temperaturen gesichert werden,
- Herstellung der Heizeinrichtung und Montage in die Kraftfahrzeuge und Aggregate mit Dieselkraftstoffantrieb sind einfach, schnell und preiswert,
- beim Filter- bzw. Filtereinsatzwechsel werden Heizelemente nicht weggeworfen,sondern bleiben dauerhaft montiert,
- es wird eine schnelle und einfache Filterreinigung ermöglicht,
- der zpezifische Kraftstoffverbrauch bei Kraftfahrzeugen und beim Aggregatbetrieb in der Winterzeit wird reduziert.

Die schon angegebenen Vorteile werden durch die Kraftstoffheizeinrichtung nach unserer Erfindung erreicht werden,bestehend aus dem Rohrheizelement,angebracht auf dem Boden der Vertikalheizkammer im Kraftstoffbehälter,aus dem Heizelement,angebracht auf dem Boden des Vorfilterbehälters auf der Vorpumpe,aus dem Rohrheizelement angebracht auf dem Boden des Hauptfilterbehälters mit elektrischer Leitung mit elektronischem Schalter und Temperaturfühler.

Die Erfindung werden wir eingehender aufgrund des Ausführungsbeispiels und dazugehöriger Pläne erläutern. Die Figuren stellen folgendes dar:
- Fig.1 -: Schematische Darstellung der Kraftstoffheizeinrichtung, die im Zuführungssystem eingebaut ist.
- Fig.2 -: Teillängsschnitt der Heizkammer im Kraftstoffbehälter.
- Fig.3 -: Teillängsschnitt des Filtergehäuses mit Filter und Kraftstoffpumpenelement.
- Fig.4 -: Teillängsschnitt des Hauptfiltergehäuses mit Filter und Heizelement.

Wie in der Fig.l zu sehen ist, besteht die Kraftstoffheizeinrichtung nach der Erfindung, vorzugsweise für Dieselkraftstoff,aus dem Kraftstoffbehälter (1) und der Hochdruckpumpe (2) auf dem_Dieselmotor,weiterhin aus der Kraftstoffpumpe (3), welche auf der Hochdruckpumpe (2) mit Vorfilter (4) angebracht ist und aus dem Hauptfilter (5), der sich zwischen der Kraftstoffpumpe (3)und der Hochdruckpumpe (2) befindet. Die Kraftstoffpumpe (3) saugt zuerst den Kraftstoff über die Heizkammer (1.1), welche vertikal in den Kraftstoffbehälter (1) eingebaut ist und dann durch die wärmeisoliert Saugleitung (6) und fördert den Kraftstoff durch die wärmeisolierte Druckleitung (8) in den Hauptfilter (5) und weiterhin in die Hochdruckpumpe (2), welche den Kraftstoff durch die Hochdruckleitung (9) in die Einspritzdüse (lo) fördert. Vom Hauptfilter (5) führt die Rückleitung (11) über das Druckventil (12) zurück in den Kraftstoffbehälter (1). In der Rückleitung (11) ist ein Druckventil (12) eingebaut, eingestellt auf den Druck, den die Hochdruckpumpe (2) fordert. Um die Heizkraft in den Filtern (4) und (5) zu schützen, wird empfohlen, daß beim Kaltmotoranlauf das Druckventil (12) geschlossen bleibt.

Im Vorfilter (4), im Hauptfilter (5) und in der Heizkammer (1.1) sind elektrische Rohrheizelemente (13),(14) und (15) eingebaut, welche durch die elektrische Leitung (16.1) verbunden sind und mit elektronischem Schalter (16) ein- und ausgeschaltet werden.

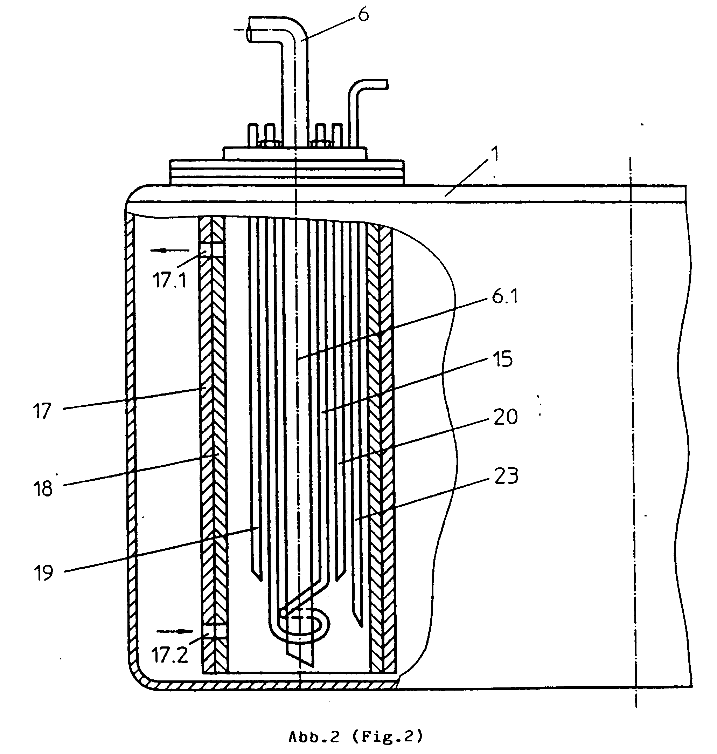

Das Ein- und Ausschalten des elektronischen Schalters(16) und hiermit das Ein- und Ausschalten der elektrischen Rohrheizelemente (13),(14) und (15) wird durch den Temperaturfühler(20)reguliert,. welcher in der Heizkammer(1.1) im Kraftstoffbehälter (1) angebracht ist,was in der Fig. 2 zu sehen ist.

Fig.2 zeigt die Heizkammer (1.1),vertikal in den Kraftsstoffbehälter (1) eingelegt,bestehend aus dem Kammergehäuse(17) und Wärmeisolation (18), mit Saugloch (17.2) auf dem unteren Teil und mit Entlüftungsloch (17.1) auf dem oberen Teil des Gehäuses (17). In das Innere des Kammergehäuses (17)sind durch das mittlere Loch in den nichtbeschriebenen Flanschen und Zwischendichtungen,angebracht am oberen Außenteil des Krafstoffbehälters (1),das Saugrohr (6.1) und das elektrische Rohrheizelement (15) montiert; das Rohrheizelement(15) verläuft an der Gesamtlänge des Saugrohrs (6.1) und ist spiral um die Saugrohrmündung (6.1) gedreht.Weiterhin sind ins Kammergehäuse (17) die Rückleitung (11), Saugleitung (23) zur Beheizung des Kraftfahrzeuginneren und der Temperaturfühler(20) eingebaut.

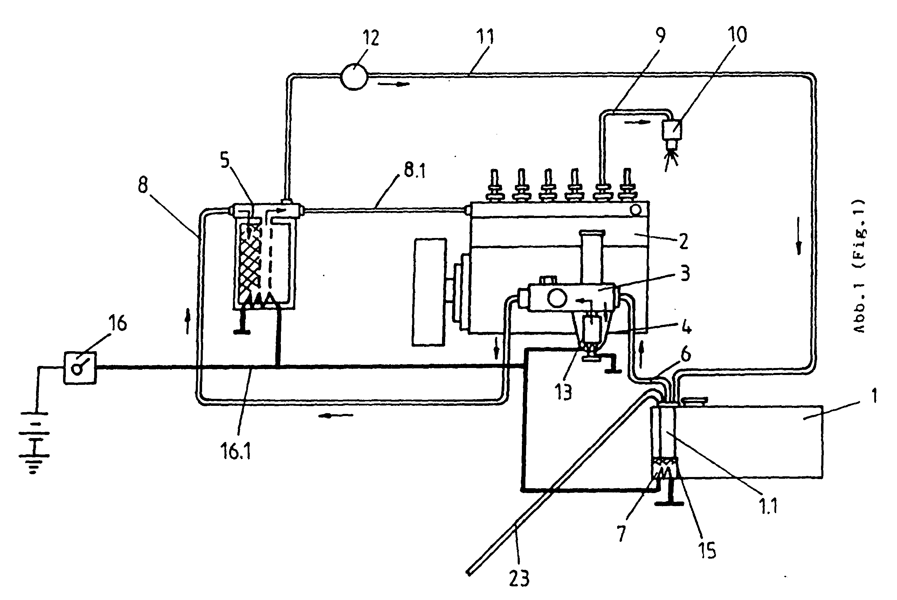

Weil die Kraftstofftemperatur,vor allem die des Dieselkraftstoffs, im Kraftstoffbehälter (1) auf -5°C sinkt,wird aufs Signal des Temperaturfühlers(20),der den elektronischen Schalter (16) einschaltet,was aus der Fig.1 ersichtlich ist,wird un ter anderem auch das elektrische Rohrheizelement (15) in der Heizkammer (1.1) eingeschaltet und erwärmt den Kraftstoff,der sich darin befindet. So erwärmter Kraftstoff fließt zusammen mit der erwärmten Luft durch das Entlüftungsloch (17.1) in einen Teil des Kraftstoffbehälters (1) an der Heizkammer (1.1).Auf diese Weise wird der Kraftstoff an der Heizkammer (1.1) erwärmt und schmelzt das Paraffin,was zu einem schnellen Saugen des erwärmten Kraftstoffs durch die Saugöffnung (17.2) in die Heizkammer (1.1) und ins Saugrohr (6.1) führt; dieses Rohr führt weiter in die wärmeisolierte Saugleitung (6) bis zur Kraftstoffpumpe (3),was aus der Fig.l ersichtlich ist.

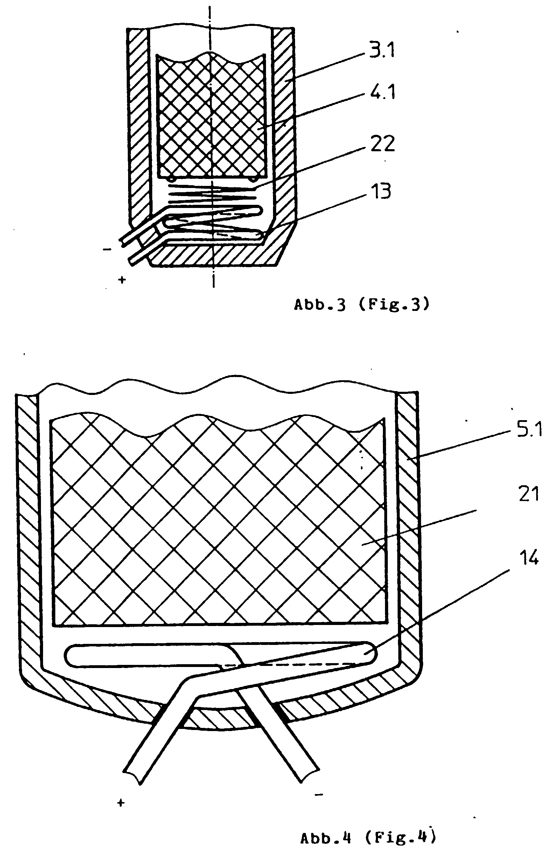

Fig.3 zeigt den Vorfilter (4) auf der Kraftstoffpumpe (3),was aus der Fig.1 ersichtlich ist,bestehend aus dem Filtergehäuse (3.1),in welches von der Unterseite das elektrische Rohrheizelement (13) eingesetzt wird,das auf dem Boden des Filtergehäuses (3.1) angebracht wird.Auf dem elektrischen Rohrheizelement (13) ist die Feder (22) angebracht und auf der Feder (22) noch der Filter(4.1).

Wenn das elektrische Rohrheizelement (13) durch den elektronischen Schalter (16) eingeschaltet wird,erwärmt dieses Element den eingefrierten Kraftstoff im Filtergehäuse (3.1) und schmelzt das Paraffin im Filter (4.1),wobei der Kraftstoffdurchfluß durch die Kraftstoffpumpe (3) nach der isolierten Druckleitung (8) bis zum Hauptfilter (5) geöffnet wird,was in der Fig. 1 zu sehen ist.

Aus Fig.4 ist das Filtergehäuse (5.1) auf dem Hauptfilter (5) ersichtlich,in welchem von der Unterseite das elektrische Rohrheizelement (14) eingesetzt ist,welches auf dem Boden des Filtergehäuses (5.1) angebracht ist.Auf dem elektrischen Rohrheizelement(l4) ist der Filter (21) angebracht.

Wenn das elektrische Rohrheizelement (14) durch den elektronischen Schalter (16) eingeschaltet wird,erwärmt dieses Element den gefrierten Kraftstoff im Filtergehäuse (5.1.) und schmelzt das Paraffin im Filter (21), wobei der Kraftstoffdurchfluß durch den Hauptfilter(5) über der isolierten Druckleitung (8.1) in die Hochdruckpumpe(2) und durch die Hochdruckleitung(9) in die Einspritzdüse(10) im nicht beschrieben Motor geöffnet wird,was aus der Fig.1 ersichtlich ist.

Die Kraftstoffheizeinrichtung,insbesondere für Dieselkraftstoff geeignet,dient nach unserer Erfindung zur Kraftstoffheizung,in erster Linie im Winter,wenn die Luftaußentemperatur unter -15°C sinkt und wenn der Kraftstoff,vor allem mit Filtrierung von -8°C im Kraftstoffbehälter (1),in den Leitungen (6),(8) und (8.1),im Vorfilter (4) auf der Kraftstoffpumpe (3) und auf dem Hauptfilter(5) einfriert,wobei die Leitungen (6),(8) und (8.1) spwie die Filter im Vorfilter (4) und im Hauptfilter (5) durch Paraffinausscheidungen verstopft werden,was auch für den Kraftstoff im Kraftstoffbehälter(1) gilt.

Vor dem Anzünden des Motors wird der elektronische Schalter (16) eingeschaltet,der auf einer Seite an eine elektrische Batterie angeschlossen ist,von der anderen Seite her ist aber auf den elektronischen Schalter(16) die elektrische Installation (16.1) angeschlossen,welche die elektrischen Rohrheizelemente (13),(14) und (15) einschaltet,die mit der Erwärmung des eingefrierten Kraftstoffes in der Heizkammer(1.1) im Kraftstoffbehälter(1), im Vorfilter(4) auf der Vorpumpe (3) und im Hauptfilter (5)beginnen, wobei das Paraffin im Kraftstoff zerschmelzt.

Der Kraftstoff in der Heizkammer (1.1) im Kraftstoffbehälter (1) wird nach ca. 10 Minuten auf die Temperatur von 0°C auf dem Boden der Heizkammer (1.1) erwärmt, wodurch das Saugen des Kraftstoffs ins Saugrohr (6.1) ermöglicht wird,während der Kraftstoff im mittleren Teil der Heizkammer (1.1) auf 80°C erwärmt wird,bei der Anfangstemperatur des Kraftstoffs von -25°C.Wegen derselben Erwärmungswirkung im Vorfilter (4) auf der Kraftstoffpumpe (3) und im Hauptfilter (5) mit zwei elektrischen Rohrheizelementen (13) und (14) und wegen der Isolationswirkung bei den Leitungen (6),(8) und (8.1), kann der Kraftstoff ungehindert aus dem Kraftstoffbehälter(l) in die Hochdruckpumpe(2) zugeführt werden,wobei Zündung und Betrieb des Motors ermöglicht sind.Zugleich kommt es zu einem Rückfluß eines Teils des erwärmten Kraftstoffs aus dem Hauptfilter(5) und durch die Rückleitung(11) mit eingebautem Druckventil(12) in die Heizkammer (1.1), wobei die gesamte Kraftstoffmenge im Kraftstoffbehälter(1) erwärmt wird. Der Kraftstoff im Kraftstoffbehälter (1) wird nach zwei Minuten nach der Motorzündung auf -1°C erwärmt (Erdöl D2 mit Filtrierung von -8°C),wobei die elektrischen Rohrheizelemente (15),(13) und (14) nach einem Signal des Temperaturfühlers(20) in der Heizkammer (1.1) ausgeschaltet werden (durch Schalter 16),womit Bedingungen geschaffen werden zum Saugen des Kraftstoffs aus dem Kraftstoffbehälter(1),welcher weiter durch den erwärmten Kraftstoff erhitzt wird,der in den Kraftstoffbehälter(1) zurückfließt.

Die elektrischen Rohrheizelemente (15),(13) und (14) werden durch den elektronischen Schalter (16) automatisch eingeschaltet,wenn der Temperaturfühler (20) in der Heizkammer(1.1) eine Temperatursenkung des Kraftstoffes unter -5°C registriert.

Der Verbrauch der elektrischen Energie zur Erwärmung des Kraftstoffs durch Rohrheizelemente (15),(13) und (14) hängt von der Motorleistung ab und er beträgt:

| | |
|---|---|
| bei den Motoren der Leistung | Vorpumpe (3) = 20W |
| von 36 kW bis 450 kW beträgt die | Hauptfilter (5) = 40W |
| erforderliche elektrische Wert von 100 W bis 300 W | Heizkammer (1.1)= 200W |

Das Anbringen von elektrischen Rohrheizelementen (13) und (14) auf dem Boden des Vorfilters (4) und auf dem Boden des Hauptfilters (5) verursacht beim Erwärmen eine Wärmeausbreitung vom Boden gegen die Spitze des Filtergehäuses (3.1) und (5.1) und hiermit eine wirkungsvolle Wärmeübertragung.

In der Heizkammer (1.1) im Kraftstoffbehälter (1) entsteht bei der Erwärmung des Kraftstoffes durch das Rohrheizelement (15) und beim Rückfluß des Kraftstoffes durch die Rückleitung (11) eine thermosphonische Wirkung,was eine effektvolle Vermischung des erwärmten und kalten Krafstoffs verursacht,wodurch eine konstante Temperatur des Kraftstoffs im Kraftstoffbehälter (1) erreicht wird, die für einen ungestörten Motorbetrieb erforderlich ist.

Wegen der gleichen Kraftstofftemperatur in der Saugleitung (6), Druckleitung (8) und Rückleitung (11) wird ein geringerer spezifischer Verbrauch und dami auch Kraftstoffersparnis erreicht; weiterhin soll noch erwähnt werden,daß man auf solche Weise eine noch vollkommenere Kraftstoffverbrennung im Motor und hiermit eine niedrigere Konzentration der Schadstoffe in Auspufgasen erreichen kann.

Die Saugleitung (23) zur Beheizung des Fahrerhauses ist in der Heizkammer (1.1) im Kraftstoffbehälter (1) montiert,was zugleich die Beheizung des Fahrerhauses ermöglicht,wobei der Separatmotor oder ein zusätzliches elektrisches Rohrheizelement zur Beheizung des Fahrzeuginneren nicht in Frage kommt,oder überhaupt nicht erforderlich ist.
In der Heizkammer (1.1) im Kraftstoffbehälter (1) wird während des Motorbetriebs nur die verbrauchte Kraftstoffmenge,und nicht die gesamte Menge des vorgepumpten erwärmt.

## Patentansprüche

1. Kraftstoffheizeinrichtung für Verbrennungsmotoren, besonders für Dieselkraftstoff, insbesondere für Dieselmotoren eines Systems, bei dem ein Tank, ein Vorfilter und ein Hauptfilter thermostatgesteuert elektrisch beheizt werden, dadurch gekennzeichnet, daß eine Heizkammer (1.1) vertikal eingesetzt in das Innere eines Kraftstoffbehälters (1) vorgesehen ist; die Heizkammer auf dem oberen Teil des Gehäuses des Kraftstoffbehälters (1) befestigt ist und bis zum Behälterboden reicht, in der Mitte der Heizkammer vertikal ein Saugrohr (6.1) eingesetzt ist, das bis zum unteren Rand eines Kammergehäuses (17) reicht, und dessen Einlaßmündung schräg unter einem Winkel zugeschnitten ist, wobei vertikal am Saugrohr (6.1) ein Heizelement (15) angebracht ist, welches an der Mündung des Saugrohrs (6.1) spiralartig gedreht ist, wobei in der Heizkammer (1.1) eine Rückleitung (11) vorgesehen ist, und in der Heizkammer (1.1) eine Heizleitung (23) zur Erwärmung des Fahrzeuginneren angebracht ist, und daß ein elektrisches Rohrheizelement (13) in das Innere und auf den Boden eines Filtergehäuses (3.1) des Vorfilters (4) einer Vorpumpe (3) gesetzt ist.

2. Kraftstoffheizeinrichtung nach Anspruch 1, dadurch gekennzeichnet, daß vertikal an der Wand des Kammergehäuses (17) ein Temperaturfühler (20) angebracht ist.

3. Kraftstoffheizeinrichtung nach einem der vorhergehenden Ansprüche, dadurch gekennzeichnet, daß am oberen Teil der Heizkammer (1.1) im Gehäuse (17) ein Entlüftungsloch (17.1) vorgesehen ist.

4. Kraftstoffheizeinrichtung nach einem der vorhergehenden Ansprüche, dadurch gekennzeichnet, daß im unteren Teil der Heizkammer (1.1) ein Saugloch (17.2) im Gehäuse (17) vorgesehen ist.

5. Kraftstoffheizeinrichtung nach Anspruch 1, dadurch gekennzeichnet, daß das elektrische Rohrheizelement (13) spiralartig ausgeführt ist.

6. Kraftstoffheizeinrichtung nach Anspruch 1, dadurch gekennzeichnet, daß ein elektrisches Rohrheizelement (14) in das Innere auf den Boden des Filtergehäuses (5.1) des Hauptfilters (5) eingesetzt ist.

7. Kraftstoffheizeinrichtung nach Anspruch 1 und 6, dadurch gekennzeichnet, daß das elektrische Heizelement (14) spiralartig ausgeführt ist.

8. Kraftstoffheizeinrichtung nach Anspruch 1, dadurch gekennzeichnet, daß die Saugleitung (6) zwischen dem Kraftstoffbehälter (1) und der Vorpumpe (3), und die Druckleitung (8) zwischen der Vorpumpe (3) und dem Hauptfilter (5) wärmeisoliert sind.

9. Kraftstoffheizeinrichtung nach Anspruch 5 oder 6, dadurch gekennzeichnet, daß die elektrischen Rohrheizelemente (13, 14, 15) mit der elektrischen Leitung (16.1) und einem elektronischen Schalter (16) verbunden sind.

10. Kraftstoffheizeinrichtung nach Anspruch 1, 2 und 9, dadurch gekennzeichnet, daß der Temperaturfühler (20) mit dem elektronischen Schalter (16) verbunden ist.

11. Kraftstoffheizeinrichtung nach Anspruch 1 und 2, dadurch gekennzeichnet, daß die Innenfläche der Heizkammer (1.1) mit Wärmeisolation (18) ausgestattet ist.

## Claims

1. Fuel heating apparatus for internal combustion engines, especially for fuel oil in particular for diesel engines of a system, in which a tank, a preliminary filter and a main filter are electrically heated in a thermostatically controlled way, characterized in that a heating chamber (1.1) is provided being mounted inside of a fuel tank (1), the heating chamber is fixed on the upper part of the housing of the fuel tank (1) and extends to the bottom of the tank, in the center of the heating chamber a suction pipe (6.1) is vertically mounted, which extends to the lower edge of a chamber housing (17), and the inlet opening of which is inclinedly cut to an angle, whereby a heating element (15) is vertically mounted on the suction pipe (6.1), which is spirally rotated at the opening of the suction pipe (6.1), whereby a return line (11) is provided in the heating chamber (1.1), and a heating line (23) is mounted in the heating chamber (1.1) for heating the interior of the vehicle, and that an electrical tubular heating element (13) is mounted inside and on the bottom of a filter housing (3.1) of the preliminary filter (4) of a preliminary pump (3).

2. Fuel heating apparatus according to claim 1, characterized in that a temperature sensor (20) is mounted on the wall of the chamber housing (17).

3. Fuel heating apparatus according to any of the preceeding claims, characterized in that a vent hole (17.1) is provided in the housing (17) at the upper part of the heating chamber (1.1).

4. Fuel heating apparatus according to any of the preceeding claims, characterized in that a suction hole (17.2) is provided in the housing (17) at the lower part of the heating chamber (1.1).

5. Fuel heating apparatus according to claim 1, characterized in that the electrical tubular heating element (13) is spirally constructed.

6. Fuel heating apparatus according to claim 1, characterized in that the electrical tubular heating element (13) is mounted inside on the bottom of the filter housing (5.1) of the main filter (5).

7. Fuel heating apparatus according to claims 1 and 6, characterized in that the electrical heating element (14) is spirally constructed.

8. Fuel heating apparatus according to claim 1, characterized in that the suction line (6) is heat insulated between the fuel tank (1) and the preliminary pump (3) and the pressure line (8) is heat insulated between the preliminary pump (3) and the main filter (5).

9. Fuel heating apparatus according to claims 5 or 6, characterized in that the electrical tubular heating elements (13, 14, 15) are connected to the electrical line (16.1) and an electronical switch (16).

10. Fuel heating apparatus according to claims 1, 2 and 9, characterized in that the temperature sensor (20) is connected to the electronical switch (16).

11. Fuel heating apparatus according to claims 1 and 2, characterized in that the inner surface of the heating chamber (1.1) is provided with a heat insulation (18).

## Revendications

1. Dispositif de chauffage de carburant pour des moteurs à combustion interne, en particulier pour un carburant diesel, notamment pour des moteurs diesel d'un système, dans lequel un réservoir, un préfiltre et un filtre principal sont chauffés électriquement d'une manière commandée par thermostat, caractérisé en ce qu'il est prévu une chambre de chauffage (1.1) insérée verticalement à l'intérieur d'un réservoir de carburant (1); la chambre de chauffage est fixée à la partie supérieure du boîtier du réservoir de carburant (1) et s'étend jusqu'à la base du récipient, et au centre de la chambre de chauffage est installé verticalement un tube d'aspiration (6.1), qui s'étend jusqu'au bord inférieur d'un boîtier (17) de la chambre et dont l'embouchure d'admission est découpée obliquement sous un certain angle, tandis que sur le tube d'aspiration (6.1) est monté verticalement un élément de chauffage (15), qui est enroulé en spirale au niveau de l'embouchure du tube d'aspiration (6.1), et que dans la chambre de chauffage (1.1) est prévue une canalisation de retour (11), et dans la chambre de chauffage (1.1) est disposée une canalisation de chauffage (23) servant à chauffer l'intérieur du véhicule, et qu'un élément de chauffage électrique tubulaire (13) est monté à l'intérieur et sur le fond d'un boîtier (3.1) du préfiltre (4) d'une pompe amont (3).

2. Dispositif de chauffage de carburant selon la revendication 1, caractérisé en ce qu'un capteur de température (20) est monté verticalement contre la paroi du boîtier (17) de la chambre.

3. Dispositif de chauffage de carburant selon l'une des revendications précédentes, caractérisé en ce qu'un trou de désaération (17.1) est prévu dans la partie supérieure de la chambre de chauffage (1,1), dans le boîtier (17).

4. Dispositif de chauffage de carburant selon l'une des revendications précédentes, caractérisé en ce qu'un trou d'aspiration (17.2) est prévu dans le boîtier (17), dans la partie inférieure de la chambre de chauffage (1.1).

5. Dispositif de chauffage de carburant selon la revendication 1, caractérisé en ce que l'élément de chauffage électrique tubulaire (13) est agencé selon une disposition en spirale.

6. Dispositif de chauffage de carburant selon la revendication 1, caractérisé en ce qu'un élément de chauffage électrique tubulaire (14) est disposé à l'intérieur sur le fond du boîtier (5.1) du filtre principal (5).

7. Dispositif de chauffage de carburant selon les revendications 1 et 6, caractérisé en ce que l'élément de chauffage électrique (14) est agencé avec une disposition en spirale.

8. Dispositif de chauffage de carburant selon la revendication 1, caractérisé en ce que la canalisation d'aspiration (6) située entre le réservoir de carburant (1) et la pompe amont (3), et la canalisation de pression (8) située entre la pompe amont (3) et le filtre principal (5) sont isolées thermiquement.

9. Dispositif de chauffage de carburant selon la revendication 5 ou 6, caractérisé en ce que les éléments chauffants électriques tubulaires (13,14,15) sont reliés au conducteur électrique (16.1) et à un interrupteur électronique (16).

10. Dispositif de chauffage de carburant selon les revendications 1, 2 et 9, caractérisé en ce que le capteur de température (20) est relié à l'interrupteur électronique (16).

11. Dispositif de chauffage de carburant selon les revendications 1 et 2, caractérisé en ce que la surface intérieure de la chambre de chauffage (1.1) est équipée d'une isolation thermique (18).
